# EUROPEAN PATENT APPLICATION

(11) **EP 4 576 528 A1**
(43) Date of publication of application: **25.06.2025**
(21) Application number: 24215788.1
(22) Date of filing: 27.11.2024
(51) Int. Cl.: H02M 1/00, H02M 1/42

(54) **POWER CONVERTER**

(30) Priority: 06.12.2023 JP 2023206348
(71) Applicant: MAZDA MOTOR CORPORATION, Hiroshima 730-8670 (JP)
(72) Inventor: Chienru, Lung, Chiba-shi, Chiba (JP)
(74) Representative: Laufhütte, Dieter

(57) **Abstract**

An alternating current/direct current (AC/DC) power converter including a bridgeless power factor correction (PFC) circuit and a controller is provided. The bridgeless PFC circuit includes input-side wirings, output-side wirings, an input-side capacitor, a reactor, and a pair of switching elements disposed between the input-side wirings and the output-side wirings, and on which a switching operation is performed by the controller. The controller includes a peak current control unit which executes a peak current mode control by using a first slope compensation circuit corresponding to a positive polarity of AC input voltage, and a second slope compensation circuit corresponding to a negative polarity of the AC input voltage. The second slope compensation circuit has an inverting circuit which inverts the polarity of the AC input voltage, and is structured using a same slope compensation circuit as the first slope compensation circuit.

## Description

The present disclosure relates to a power converter (alternating current/direct current (AC/DC) converter) which converts AC voltage to DC voltage.

In recent years, electrification of automobiles, such as electric vehicles and hybrid vehicles, has become significantly active. These vehicles that run on electric power are equipped with high-output batteries as their power source. To charge the batteries, these vehicles are also equipped with charging systems (On Board Chargers: OBCs) that convert commercial AC power into DC power.

Many OBCs use AC/DC converters equipped with power factor correction circuits (PFC circuits) to solve power factor reduction caused by distortion of an input current waveform (e.g., JP2021-069253A). One type of PFC circuits that is widely used is a bridgeless PFC circuit in which diodes of a full-wave rectifier circuit with high loss is replaced with a switching element (MOSFET) to improve efficiency.

The AC/DC converter equipped with such a bridgeless PFC circuit generally adopts an average current mode control since there is no need to apply slope compensation in the control method.

However, the average current mode control has a disadvantage in which a reactor becomes large in size since the current control becomes unstable when the capacity of the reactor is small. In addition, since the switching frequency is basically the same as the control frequency, it is also disadvantageous in that it is difficult to increase the switching frequency.

For the disclosed technology, JP2022-129664A discloses a bridgeless PFC circuit, in which every time a polarity of input voltage changes between positive and negative, the polarity is determined and two MOSFETs (Nch) are controlled to switch between an active switch and a synchronous rectification switch. With this method, due to the complex polarity determination, the circuit and control are likely to become complicated.

One possible solution to the above-mentioned disadvantages of the average current mode control is adoption of a peak current mode control. By adopting the peak current mode control, the pulsation of the reactor current can be made larger than that of the average current mode control, and the current control is relatively stable even if the capacity of the reactor is small. Therefore, the reactor can be made smaller in size. However, in the case of the peak current mode control, the slope compensation is necessary to ensure stable operation.

In this regard, electronic components such as integrated circuits (ICs) and microcomputers that perform the function of slope compensation are commercially available. Therefore, these electronic components (slope compensation function components) are considered to be used as the AC/DC converters equipped with the bridgeless PFC circuits.

However, those commercially-available slope compensation function components have been developed for DC/DC converters which handle DC power, and therefore are structured to only process signals for positive slope compensation. In contrast, the AC/DC converters that handle AC power require signal processing with negative slope compensation, and therefore the peak current mode control is not possible by simply using the commercially-available slope compensation function components as they are. This is likely a significant reason why the average current mode control has become the mainstream in the AC/DC converters equipped with the bridgeless PFC circuits.

Thus, the present disclosure discloses a technique which enables an AC/DC converter provided with a bridgeless PFC circuit to perform a peak current mode control using commercially-available slope compensation function components.

The present disclosure relates to a power converter configured to convert AC input voltage into DC output voltage, including a converter mechanism having a bridgeless PFC circuit and a controller which controls the converter mechanism, that is, an AC/DC converter.

The bridgeless PFC circuit includes a pair of input-side wirings which inputs the AC input voltage, a pair of output-side wirings which outputs the DC output voltage, a capacitor connected to the pair of input-side wirings, a reactor disposed in at least one of the pair of input-side wirings at a position on an output side of a connecting position with the capacitor, and a first switching element and a second switching element each disposed between one of the pair of input-side wirings and one of the pair of output-side wirings, and on which a switching operation is performed by the controller.

The controller includes a peak current control unit which executes a peak current mode control by using a first slope compensation circuit corresponding to a positive polarity of the AC input voltage, and a second slope compensation circuit corresponding to a negative polarity of the AC input voltage. The second slope compensation circuit has an inverting circuit which inverts the polarity of the AC input voltage, and is structured using a same slope compensation circuit as the first slope compensation circuit.

In other words, according to the power converter, the second slope compensation circuit corresponding to the negative polarity includes the inverting circuit which inverts the polarity of the input voltage, and is structured using the same slope compensation circuit as the first slope compensation circuit. Thus, the peak current mode control can be performed using commercially-available slope compensation function components, making it possible to reduce the size of the reactor and providing an AC/DC converter which is inexpensive and high in performance.

The controller may further include a DC voltage control unit which outputs a first input current command value corresponding to the maximum value of the input current flowing in the input-side wirings on the output side from the connecting positions with the capacitor. The first input current command value may be converted to a second input current command value corresponding to an instantaneous value based on a phase of the AC input voltage. A peak current command value output to the peak current control unit may be set by adding a given current correction amount to the second input current command value.

Thus, the peak current mode control can be performed with a relatively simple circuit.

The controller may further include an AC current control unit which receives the second input current command value and outputs a third input current command value corresponding to an instantaneous value of the input current flowing in the input-side wirings at the connecting positions with the capacitor. The peak current command value received by the peak current control unit may be set by adding the current correction amount to the third input current command value.

Thus, improvements in responsiveness and a distortion rate of the reactor current can be expected. In detail, crossover distortion can be suppressed. As a result, a total harmonic distortion rate of the reactor current can be improved. Therefore, it is possible to provide an AC/DC converter with higher performance.

The bridgeless PFC circuit may include various configurations.

For example, the bridgeless PFC circuit may further include a first diode and a second diode, and a first leg and a second leg connected in parallel to each other between the pair of output-side wirings. The first leg may be provided with the first switching element and the first diode in series so that the current flows in directions away from each other, and the second leg may be provided with the second switching element and the second diode symmetrically to the first switching element and the first diode. An output end of one of the input-side wirings may be connected to the first leg between the first switching element and the first diode, and an output end of the other one of the input-side wirings may be connected to the second leg between the second switching element and the second diode.

Alternatively, the bridgeless PFC circuit may further include a first diode and a second diode, and a first leg and a second leg connected in parallel to each other between the pair of output-side wirings. The first leg may be provided with the first diode and the second diode in series so that the current flows in the same direction, and the second leg may be provided with the first switching element and the second switching element in series so that the current flows opposite from the first diode and the second diode. An output end of one of the input-side wirings may be connected to the first leg between the first diode and the second diode, and an output end of the other one of the input-side wirings may be connected to the second leg between the first switching element and the second switching element.

Alternatively, the bridgeless PFC circuit may further include a first diode, a second diode, a third diode, and a fourth diode, a first leg and a second leg connected in parallel to each other between the pair of output-side wirings, and a third leg connected to the pair of input-side wirings therebetween, on the output side from the reactor. The first leg may be provided with the first diode and the second diode in series so that the current flows in the same direction, and the second leg may be provided with the third diode and the fourth diode symmetrically to the first diode and the second diode. The third leg may be provided with the first switching element and the second switching element in series so that the current flows against each other. An output end of one of the input-side wirings may be connected to the first leg between the first diode and the second diode, and an output end of the other one of the input-side wirings may be connected to the second leg between the third diode and the fourth diode.

The present disclosure can be applied effectively to the AC/DC converters including such configurations of bridgeless PFC circuits.

### BRIEF DESCRIPTION OF DRAWINGS

Fig. 1 is a schematic diagram illustrating an application example of one embodiment of the present disclosure.
Fig. 2 is a diagram illustrating an applicable bridgeless PFC circuit.
Fig. 3 is a diagram illustrating a specific operation of an AC/DC converter.
Fig. 4 is a block diagram and mathematic formulas illustrating a control circuit of a controller.
Fig. 5 is a block diagram of a control circuit of an improved controller.
Fig. 6 is a block diagram of a control circuit of a peak current controlling part.
Fig. 7 is a setting table of a lookup table of a determining part.
Fig. 8 is a diagram illustrating switching patterns applied in a peak current mode control.
Figs. 9A and 9B are diagrams illustrating simulation results.
Fig. 10 is a diagram illustrating a simulation result.

### DETAILED DESCRIPTION OF THE DISCLOSURE

Hereinafter, one embodiment of the present disclosure is described with reference to the accompanying drawings. Note that the following description is essentially merely illustrative. Components of circuits are annotated with specific marks along with alphanumeric codes to identify them. For the sake of convenience, the circuit components may be described or illustrated using only those marks. The capital letter "I" for current indicates its maximum value (amplitude value), and the lowercase letter "i" for current indicates its instantaneous value.

### <Outline of Power Converter>

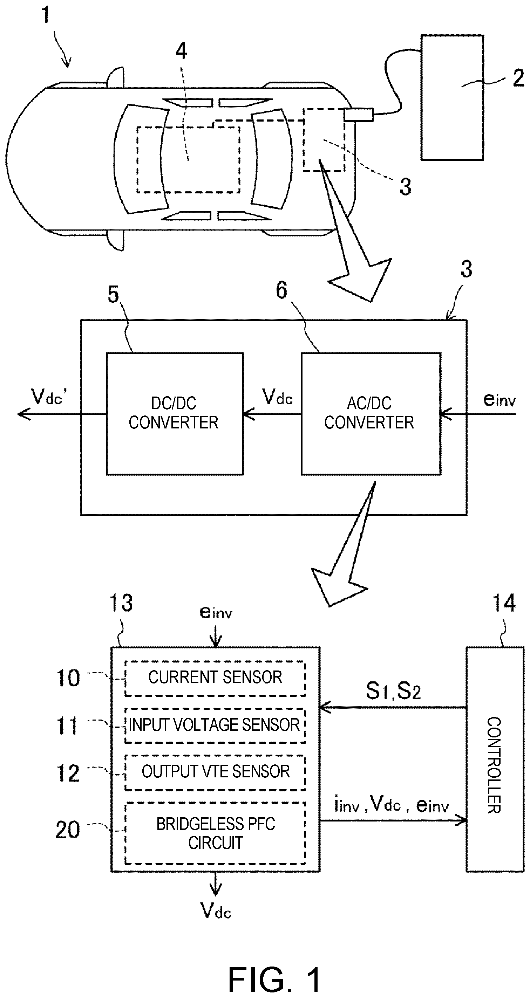

Fig. 1 illustrates an application example in which a power converter according to one embodiment is applied to an on-board charging system (OBC) 3. The charging system 3 is installed in a vehicle 1 which travels using electric power, such as an electric vehicle or a hybrid vehicle, together with a high-output battery 4 for driving.

The top part of Fig. 1 illustrates the vehicle 1 and a commercial power source 2 during charging. The commercial power source 2 outputs high alternating current (AC) voltages such as 100V and 200V. The battery 4 is charged by connecting the commercial power source 2 to the vehicle 1 by a cable. Here, the charging system 3 interposes between the battery 4 and the commercial power source 2, and converts the AC voltage into direct current DC voltage compatible with the battery 4.

As illustrated in the middle part of Fig. 1, the charging system 3 is comprised of a DC/DC converter 5, an AC/DC converter 6, etc. The AC/DC converter 6 converts AC input voltage (eᵢₙᵥ) into DC output voltage (V_{dc}), and is an example of a "power converter." In other words, the technology disclosed in this embodiment is applied to the AC/DC converter 6.

The DC/DC converter 5 converts DC voltage into different DC voltage. The DC/DC converter 5 converts the DC voltage (V_{dc}) converted by the AC/DC converter 6 into given DC voltage (V_{dc'}) and outputs it to the battery 4 side.

As illustrated in the lower part of Fig. 1, the AC/DC converter 6 includes a converter mechanism 13 having a current sensor 10, an input voltage sensor 11, an output voltage sensor 12, and a bridgeless power factor correction (PFC) circuit 20, and a controller 14 which controls the converter mechanism 13.

The current sensor 10 is a Hall element type sensor and is installed at a given position of an input-side wiring 21, as described below. The current sensor 10 directly measures input current (reactor current iᵢₙᵥ) flowing through a reactor 24 and outputs it to the controller 14. The input voltage sensor 11 is also installed at a given position of the input-side wiring 21, and directly measures the AC input voltage einv inputted to the AC/DC converter 6 and outputs it to the controller 14. The output voltage sensor 12 is installed at a given position of an output-side wiring 22 and directly measures the DC output voltage V_{dc} outputted from the AC/DC converter 6 and outputs it to the controller 14.

Based on these measurement values, the controller 14 performs an ON/OFF control by outputting drive voltage to two switching elements S1 and S2 of the bridgeless PFC circuit 20. That is, the controller 14 switches the switching elements S1 and S2 between a conducting state (ON) and a non-conducting state (OFF) at a given timing.

### (Bridgeless PFC Circuit)

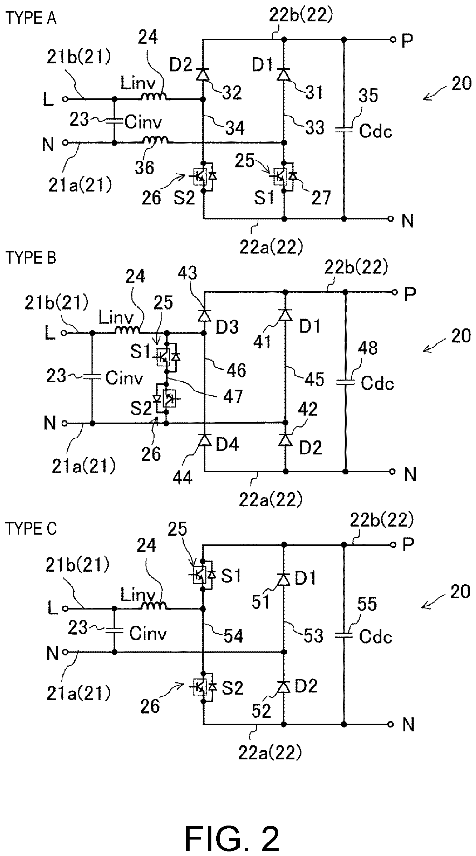

Fig. 2 illustrates types A to C of the bridgeless PFC circuit 20 applicable to the AC/DC converter 6. All of these types of bridgeless PFC circuits 20 have a common basic circuit.

That is, each of the A-C bridgeless PFC circuits 20 has a pair of input-side wirings 21 (an N input-side wiring 21a on the ground side and an L input-side wiring 21 b on the non-ground side), a pair of output-side wirings 22 (an N output-side wiring 22a on the negative side and a P output-side wiring 22b on the positive side), an input-side capacitor 23 (Cᵢₙᵥ), the reactor 24 (Lᵢₙᵥ), a first switching element 25 (S1), and a second switching element 26 (S2).

The pair of input-side wirings 21 is disposed on the side of the commercial power source 2, and the AC input voltage eᵢₙᵥ is inputted to input terminals thereof. On the other hand, the pair of output-side wirings 22 is disposed on the side of the battery 4, and the DC output voltage V_{dc} is outputted from output terminals thereof. The input-side capacitor 23 is connected between the pair of input-side wirings 21 near the input terminals.

The reactor 24 is disposed at least in one of the input-side wiring 21 at a position on the output side from a connecting point of the input-side capacitor 23. In this embodiment, the reactor 24 is disposed in the L input-side wiring 21b. While the first switching element 25 and the second switching element 26 have different positional arrangements depending on the type, they are disposed between the input-side wirings 21 and the output-side wirings 22.

Each of the first switching element 25 and the second switching element 26 is made of a known MOSFET having gate, source, and drain terminals. Each of the first switching element 25 and the second switching element 26 is turned ON by receiving a given drive voltage in the gate terminal. Both the first switching element 25 and the second switching element 26 include a flyback diode 27 connected in inverse parallel to the electrical load.

In the case of the type A bridgeless PFC circuit 20, in addition to the basic circuit described above, it further includes a first diode 31 (D1), a second diode 32 (D2), a first leg 33, a second leg 34, an output-side capacitor 35 (C_{dc}), and a second reactor 36. The second reactor 36 is arranged in the N input-side wiring 21a symmetrically to the reactor 24. Note that the second reactor 36 may be omitted.

The output-side capacitor 35 is connected between the pair of output-side wirings 22a and 22b near output terminals thereof. The first leg 33 and the second leg 34 are connected in parallel to each other between the pair of output-side wirings 22a and 22b on the input side of the output-side capacitor 35. Further, the first switching element 25 and the first diode 31 are arranged in series in the first leg 33 so that the current flows in the direction away from each other.

Specifically, the first switching element 25 and the first diode 31 are arranged in this order from the N output-side wiring 22a side to the P output-side wiring 22b side. In the ON state, the first switching element 25 is arranged so that the current flows from the P output-side wiring 22b side to the N output-side wiring 22a side, and the first diode 31 is arranged so that the current flows from the N output-side wiring 22a side to the P output-side wiring 22b side.

The second switching element 26 and the second diode 32 are arranged in the second leg 34 symmetrically to the first switching element 25 and the first diode 31.

Specifically, the second switching element 26 and the second diode 32 are arranged in this order from the N output-side wiring 22a side to the P output-side wiring 22b side. In the ON state, the second switching element 26 is arranged so that the current flows from the P output-side wiring 22b side to the N output-side wiring 22a side, and the second diode 32 is arranged so that the current flows from the N output-side wiring 22a side to the P output-side wiring 22b side.

An output end of the N input-side wiring 21a is connected to the first leg 33 between the first switching element 25 and the first diode 31. An output end of the L input-side wiring 21b is connected to the second leg 34 between the second switching element 26 and the second diode 32.

In the case of the type B bridgeless PFC circuit 20, in addition to the basic circuit described above, it further includes a first diode 41, a second diode 42, a third diode 43 (D3), a fourth diode 44 (D4), a first leg 45, a second leg 46, a third leg 47, and an output-side capacitor 48.

The output-side capacitor 48 is connected between the pair of output-side wirings 22a and 22b near output terminals thereof. The first leg 45 and the second leg 46 are connected in parallel to each other between the pair of output-side wirings 22a and 22b on the input side of the output-side capacitor 48. The third leg 47 is connected between the pair of input-side wirings 21a and 21b on the output side of the reactor 24. The first diode 41 and the second diode 42 are arranged in series in the first leg 45 to have the same conductive direction.

Specifically, the second diode 42 and the first diode 41 are arranged in this order from the N output-side wiring 22a side to the P output-side wiring 22b side. Further, the first diode 41 and the second diode 42 are arranged so that the current flows from the N output-side wiring 22a side to the P output-side wiring 22b side.

The third diode 43 and the fourth diode 44 are arranged in the second leg 46 symmetrically to the first diode 41 and the second diode 42. Specifically, the fourth diode 44 and the third diode 43 are arranged in this order from the N output-side wiring 22a side to the P output-side wiring 22b side. The third diode 43 and the fourth diode 44 are arranged so that the current flows from the N output-side wiring 22a side to the P output-side wiring 22b side.

The first switching element 25 and the second switching element 26 are arranged in series in the third leg 47 to have opposing conductive directions to each other. Specifically, the second switching element 26 and the first switching element 25 are arranged in this order from the N input-side wiring 21a side to the L input-side wiring 21b side. The second switching element 26 in the ON state is arranged so that the current flows from the N input-side wiring 21a side to the L input-side wiring 21b side, and the first switching element 25 in the ON state is arranged so that the current flows from the L input-side wiring 21b side to the N input-side wiring 21a side.

The output end of the N input-side wiring 21a is connected to the first leg 45 between the first diode 41 and the second diode 42. The output end of the L input-side wiring 21b is connected to the second leg 46 between the third diode 43 and the fourth diode 44.

In the case of the type C bridgeless PFC circuit 20, in addition to the basic circuit described above, it further includes a first diode 51, a second diode 52, a first leg 53, a second leg 54, and an output-side capacitor 55.

The output-side capacitor 55 is connected between the pair of output-side wirings 22a and 22b near output terminals thereof. The first leg 53 and the second leg 54 are connected in parallel to each other between the pair of output-side wirings 22a and 22b on the input side of the output-side capacitor 55.

The first diode 51 and the second diode 52 are arranged in series in the first leg 53 to have the same conductive direction. Specifically, the second diode 52 and the first diode 51 are arranged in this order from the N output-side wiring 22a side to the P output-side wiring 22b side. Both of the first diode 51 and the second diode 52 are arranged so that the current flows from the N output-side wiring 22a side to the P output-side wiring 22b side.

The first switching element 25 and the second switching element 26 are arranged in series in the second leg 54 so that the current flows opposite from that in the first diode 51 and the second diode 52. Specifically, the second switching element 26 and the first switching element 25 are arranged in this order from the N output-side wiring 22a side to the P output-side wiring 22b side. Further, both of the first switching element 25 and the second switching element 26 are arranged so that the current flows from the P output-side wiring 22b side to the N output-side wiring 22a side in the ON state.

Further, the output terminal of the N input-side wiring 21a is connected to the first leg 53 between the first diode 51 and the second diode 52. The output terminal of the L input-side wiring 21b is connected to the second leg 54 between the first switching element 25 and the second switching element 26.

### <Operation by Specific Control of Power Converter>

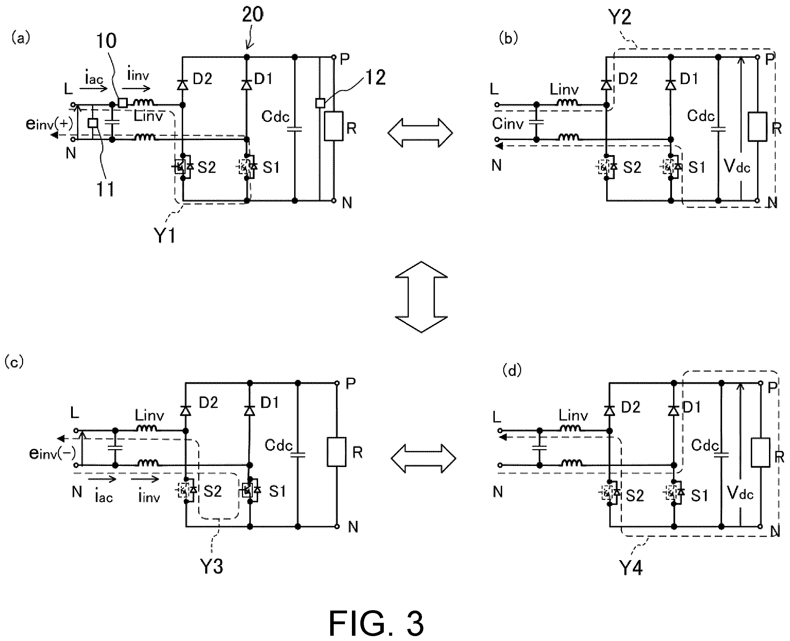

A specific operation of the AC/DC converter 6 by the control of the controller 14 is described with reference to Fig. 3. Fig. 3 illustrates different operating states of the type A bridgeless PFC circuit 20.

A reference character R illustrated in Fig. 3 indicates a load resistance on the side of the battery 4. The current sensor 10, the input voltage sensor 11, and the output voltage sensor 12 are also illustrated in part (a) of Fig. 3 in a simplified manner. Note that although the type B and C bridgeless PFC circuits 20 have different current paths as they have different circuit structures, since the control targets are the same first switching element S1 and second switching element S2, the explanation of the operations thereof is omitted.

In Fig. 3, parts (a) and (b) indicate an operation when the polarity of the input voltage eᵢₙᵥ is positive (during a positive half cycle). On the other hand, parts (c) and (d) illustrate an operation when the polarity of the input voltage eᵢₙᵥ is negative (during a negative half cycle). The operations of parts (a) to (d) are repeated according to the polarity of the input voltage eiₙᵥ.

In other words, the controller 14 executes a switching operation of the first switching element S1 and the second switching element S2 according to the polarity of the input voltage eᵢₙᵥ, which changes periodically, in order to change the target of the switching operation. Specifically, when the polarity of the input voltage eᵢₙᵥ is positive, as illustrated in parts (a) and (b), the switching operations of the first switching element S1 and the second switching element S2 are performed. When the polarity of the input voltage eᵢₙᵥ is negative, as illustrated in parts (c) and (d), the switching operation of the second switching element S2 and the first switching element S1 are performed.

As illustrated in part (a), when the polarity of the input voltage eᵢₙᵥ is positive and the second switching element S2 is turned ON, input current i_{ac} flows from the L input-side wiring 21b. Then, as indicated by a dashed arrow Y1, the input current i_{ac} flows through a current path comprised of an intermediate position of the second leg 34, the second switching element S2, the N output-side wiring 22a, the first switching element S1 (the flyback diode 27), an intermediate position of the first leg 33, and the N input-side wiring 21a. In other words, the input current i_{ac} does not flow to the battery 4 side.

As illustrated in part (b), when the polarity of the input voltage eᵢₙᵥ is positive and the second switching element S2 is turned OFF, as indicated by a dashed arrow Y2, the input current i_{ac} flowing in from the L input-side wiring 21b flows through a current path comprised of the intermediate position of the second leg 34, the second diode 52, the P output-side wiring 22b, the load resistor R, the N output-side wiring 22a, the first switching element S1 (the flyback diode 27), the intermediate position of the first leg 33, and the N input-side wiring 21a. In other words, the input current i_{ac} flows to the battery 4 side.

As illustrated in part (c), when the polarity of the input voltage eᵢₙᵥ is negative and the first switching element S1 is turned ON, the input current i_{ac} flows in from the N input-side wiring 21a. Then, as indicated by a dashed arrow Y3, the input current i_{ac} flows through a current path comprised of the intermediate position of the first leg 33, the first switching element S1, the N output-side wiring 22a, the second switching element S2 (the flyback diode 27), the intermediate position of the second leg 34, and the L input-side wiring 21b. In other words, the input current i_{ac} does not flow to the battery 4 side.

As illustrated in part (d), when the polarity of the input voltage eᵢₙᵥ is negative and the first switching element S1 is turned OFF, as illustrated by a dashed arrow Y4, the input current i_{ac} flowing in from the N input-side wiring 21a flows through a current path comprised of the intermediate position of the first leg 33, the first diode D1, the P output-side wiring 22b, the load resistor R, the N output-side wiring 22a, the second switching element S2 (the flyback diode 27), the intermediate position of the second leg 34, and the L input-side wiring 21b. That is, the input current i_{ac} flows to the battery 4 side.

### <Control Circuit of Controller>

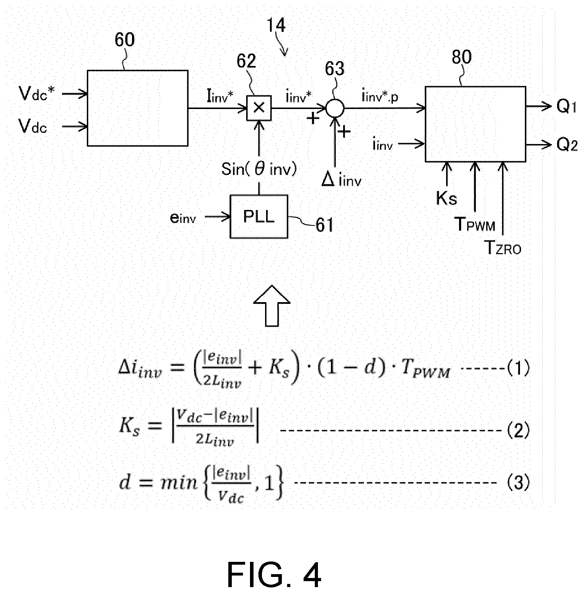

As described above, the controller 14 outputs required output voltage command V*_{dc} by switching between the first switching element S1 and the second switching element S2. One example of a block diagram of the control circuit provided to the AC current controller 14 for this is illustrated in Fig. 4.

The AC current controller 14 is followed by the AC current command I*inv (peak-value) of DC voltage control unit 60 which controls the AC current so that a given level of the output voltage command V*_{dc} is outputted in response to an output request of the output voltage V_{dc}, and a peak current control unit 80 which controls an ON/OFF timing of the first switching element S1 and the second switching element S2. The controller 14 is also configured with a phase locked loop 61, a multiplier 62, and an adder 63.

The DC voltage control unit 60 receives a command value V_{dc}* of the output voltage and an actual value V_{dc} of the output voltage measured by the output voltage sensor 12. Further, the DC voltage control unit 60 outputs a command value (a first input current command value Iᵢₙᵥ*) corresponding to a maximum value of the input current (a reactor current iᵢₙᵥ) flowing in the input-side wiring 21 on the output side of a connecting position of the input-side capacitor 23, that is, the reactor 24. The actual value V_{dc} of the output voltage is used as a feedback value, and the DC voltage control unit 60 controls the first input current command value Iᵢₙᵥ* so that the actual value V_{dc} coincides with the command value V_{dc}*.

The first input current command value Iᵢₙᵥ* is inputted to the multiplier 62, where it is converted into a command value (a second input current command value iᵢₙᵥ*) corresponding to an instantaneous value based on the phase of the input voltage eiₙᵥ.

Specifically, the actual value of the input voltage eᵢₙᵥ measured by the input voltage sensor 11 is inputted to the phase synchronization circuit 61. The phase angle θᵢₙᵥ of the input voltage eᵢₙᵥ is calculated based on the actual value, and a given signal (a phase signal, sin(θᵢₙᵥ)) is outputted from the phase synchronization circuit 61 based on the phase angle θᵢₙᵥ and received by the multiplier 62. In the multiplier 62, the first input current command value Iᵢₙᵥ* is multiplied by the phase signal sin(θᵢₙᵥ) to calculate the second input current command value iᵢₙᵥ*, and this value is outputted.

The second input current command value iᵢₙᵥ* is inputted to the adder 63, where a given current correction amount Δiᵢₙᵥ is added. In this way, a peak current command value iᵢₙᵥ*.p is set as an instantaneous value to be received by the peak current control unit 80. The current correction amount Δiᵢₙᵥ is an estimated value of a pulsation component of the reactor current, and is calculated by Equation (1) illustrated in Fig. 4.

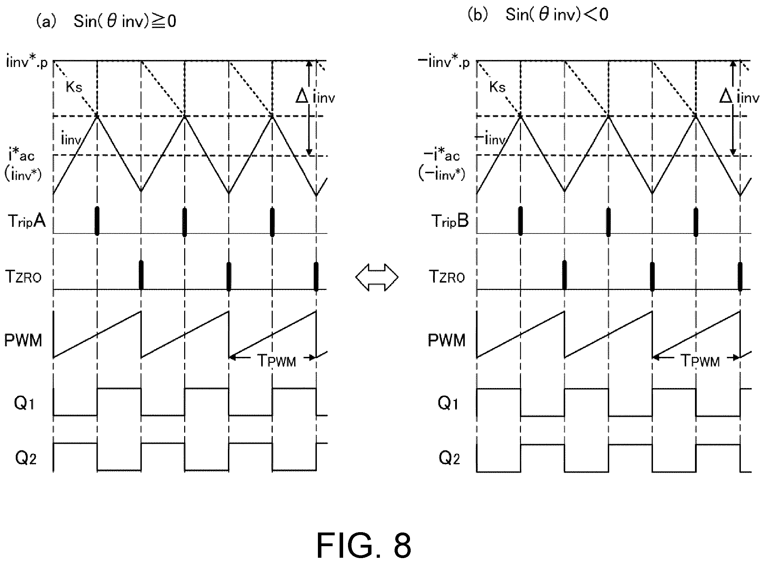

In Equations (1) to (3), "Lᵢₙᵥ" indicates an inductance of the reactor 24. As described later, the PWM method which changes a duty ratio is used for the switching operation of the first switching element S1 and the second switching element S2. "T_{PWM}" is a cycle signal indicating a timing corresponding to the switching cycle (a preset constant value) in the PWM control (see Fig. 8). "Ks" of Equation (2) is a value of a slope used for slope compensation in a peak current mode control described later. "d" of Equation (3) is a ratio of the input voltage to the output voltage.

In addition to the peak current command value iᵢₙᵥ*.p, the actual value iᵢₙᵥ of the reactor current measured by the current sensor 10 is introduced as a feedback value to the peak current control unit 80. Further, T_{PWM}, Ks, and T_{ZRO} are also introduced to the peak current control unit 80. "T_{ZRO}" is a set signal indicating a timing corresponding to 0 degree of the switching cycle in the PWM control.

As a result, the peak current control unit 80 outputs control signals Q1 and Q2 indicating a timing to turn ON/OFF the first switching element S1 and the second switching element S2.

### (Application Example of Controller)

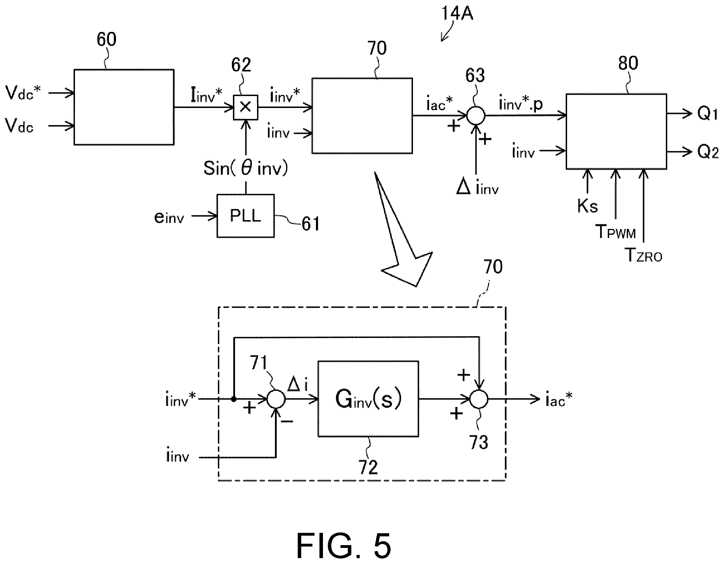

Fig. 5 illustrates an application example of the controller 14 of which the control circuit is devised (an improved controller 14A). The control circuit of the improved controller 14A is the same as that described above with addition of an AC current control unit 70 between the multiplier 62 and the adder 63.

Specifically, the improved controller 14A is further configured with the AC current control unit 70 which introduces a second input current command value iᵢₙᵥ*, and outputs a command value (a third input current command value i_{ac}*) corresponding to the instantaneous value of the input current (AC current i_{ac}) flowing on the input side of the connecting position of the input-side wiring 21 with the input-side capacitor Cinv. By adding the third input current command value i_{ac}* inputted to the adder 63 with the current correction amount Δiᵢₙᵥ, the peak current command value iᵢₙᵥ*.p to be introduced to the peak current control unit 80 is set. Here, the second current command value iᵢₙᵥ* illustrated in Fig. 5 is a target current command value (before correction) of the AC current control unit 70, and the third current command value i_{ac}* is an output current command value (an output value of a feedback control block) after the correction by the AC current control unit 70.

The AC current control unit 70 has a subtractor 71, an AC current compensator 72, and a second adder 73. The AC current control unit 70 introduces the reactor current value iᵢₙᵥ measured by the current sensor 10 together with the second input current command value iᵢₙᵥ*. The subtractor 71 calculates a current difference value Δi by subtracting the reactor current value iᵢₙᵥ from the second input current command value iᵢₙᵥ*.

The current difference value Δi is inputted to the AC current compensator 72 configured with a given transfer function, and an output value obtained thereby is added to the second input current command value iᵢₙᵥ* by the second adder 73. In this manner, the AC current control unit 70 calculates and outputs the third input current command value iac*.

As described later, since the peak current control unit 80 has a function of performing a feedback control, there is essentially no need to provide such an AC current control unit 70, and since the peak current control unit 80 also performs a control based on the instantaneous value, there is also a problem where the AC current control unit 70 and the peak current control unit 80 tend to interfere with each other. Therefore, providing such an AC current control unit 70 is not commonly considered.

However, by providing such an AC current control unit 70, improvements in responsiveness and a distortion rate of the reactor current iᵢₙᵥ can be expected. In detail, crossover distortion, which is an inherent problem of the PFC circuit, can be suppressed. As a result, as described later, a total harmonic distortion rate of the reactor current iᵢₙᵥ can be improved. Incidentally, the interference between the AC current control unit 70 and the peak current control unit 80 can be avoided by appropriately designing the AC current compensator 72.

### (Peak Current Control Unit)

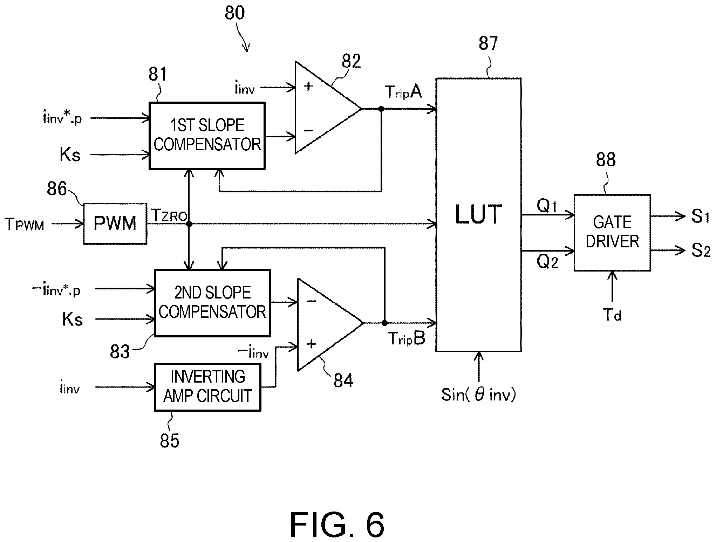

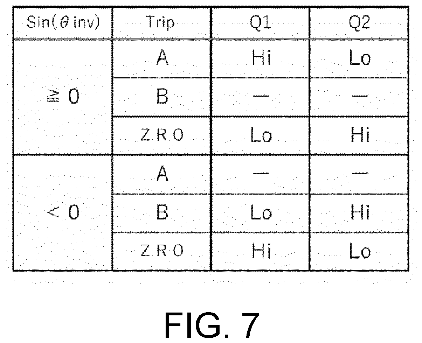

Fig. 6 illustrates a block diagram of the control circuit of the peak current control unit 80. Fig. 7 illustrates a setting table of a lookup table provided by a determination unit 87 described later. Fig. 8 illustrates a switching pattern by the peak current mode control. Part (a) of Fig. 8 illustrates the switching pattern during the positive half cycle, and part (b) of Fig. 8 illustrates the switching pattern during the negative half cycle.

This controller 14 (or the improved controller 14A, omitted below) is devised to be usable of inexpensive, commercially-available electronic components in order to provide the slope compensation function essential for the peak current mode control.

In other words, electronic components (slope compensation function components) such as integrated circuits (ICs) and microcomputers bearing the slope compensation function are commercially available, but these slope compensation function components have been developed for DC/DC converters which handle DC power, and are therefore structured to only be able to process signals for positive slope compensation.

In contrast, the controller 14 handles AC power also requiring signal processing for negative slope compensation, and therefore the peak current mode control cannot be achieved by simply using the commercially-available slope compensation function components as they are.

In this regard, in the controller 14, the peak current control unit 80 executes the peak current mode control by using a first slope compensation circuit corresponding to the positive polarity of the input voltage eᵢₙᵥ and a second slope compensation circuit corresponding to the negative polarity of the input voltage eiₙᵥ. The second slope compensation circuit includes an inversion circuit which inverts the polarity of the input voltage eᵢₙᵥ, and is configured using the same slope compensator as the first slope compensation circuit, that is, the slope compensator corresponding to the positive polarity.

Therefore, in the case of the controller 14, the peak current mode control can be achieved by using only the commercially-available slope compensation function components for the slope compensator. This allows the peak current mode control to be achieved with a simple and inexpensive circuit configuration. As a result, the stable operation can be achieved even if the reactor 24 is made smaller in size.

Specifically, the peak current control unit 80 has a first slope compensator 81, a first comparator 82, a second slope compensator 83, a second comparator 84, an inverting amplifier circuit 85, a pulse width modulation (PWM) control unit 86, the determination unit 87, a gate driver 88, etc. The first slope compensator 81 and the first comparator 82 constitute the first slope compensation circuit, and the second slope compensator 83, the second comparator 84, and the inverting amplifier circuit 85 constitute the second slope compensation circuit.

As described above, the first slope compensator 81 and the second slope compensator 83 have the same function supporting the positive polarity of the input voltage eᵢₙᵥ, and are constructed using the commercially-available slope compensation function components, such as analog ICs and control microcomputers.

The first slope compensator 81 receives a positive peak current command value iᵢₙᵥ*.p corresponding to the positive half cycle, and Ks. "Ks" corresponds to a given slope value which is applied to the positive peak current control command value iᵢₙᵥ* p. Ks is generally used to suppress occurrence of low-frequency oscillation which occurs when the duty ratio exceeds 50%.

The first slope compensator 81 also receives a pulse-shaped set signal T_{ZRO} and a first reset signal TᵣᵢₚA. As illustrated in Fig. 8, the set signal T_{ZRO} is outputted at a timing corresponding to 0 degree of the switching cycle. The first reset signal TᵣᵢₚA is outputted at a timing corresponding to an upper limit (peak) of the reactor current iᵢₙᵥ.

The set signal T_{ZRO} is inputted from the PWM control unit 86 based on the cycle signal. The first reset signal TᵣᵢₚA is outputted from the first comparator 82 and then fed back to the first slope compensator 81. The first slope compensator 81 sets or resets the positive peak current command value iᵢₙᵥ*.p based on the set signal T_{ZRO} and the first reset signal TᵣᵢₚA.

The first slope compensator 81 applies the slope to the positive peak current command value iᵢₙᵥ*.p based on the positive peak current command value iᵢₙᵥ*.p and Ks, and outputs a result thereof to the first comparator 82 (the sloped dashed line portion in Part (a) of Fig. 8).

The first comparator 82 compares its output value with the value of the reactor current iᵢₙᵥ. When the output value of the first comparator 82 matches the value of the reactor current iᵢₙᵥ (the matching portion in Part (a) of Fig. 8), the first comparator 82 outputs the first reset signal TᵣᵢₚA. The first reset signal TᵣᵢₚA is fed back to the first slope compensator 81. The first reset signal TᵣᵢₚA is also outputted to the determination unit 87.

The second slope compensator 83 receives a negative peak current command value -iᵢₙᵥ*.p corresponding to the negative half cycle and Ks. As with the first slope compensator 81, the second slope compensator 83 also receives the set signal T_{ZRO} and the second reset signal TᵣᵢₚB. The second slope compensator 83 sets or resets the negative peak current command value -iᵢₙᵥ*.p based on the set signal T_{ZRO} and the second reset signal TᵣᵢₚB.

The second slope compensator 83 applies a slope to the negative peak current command value -iᵢₙᵥ*.p based on the negative peak current command value -iᵢₙᵥ*.p and Ks, and outputs a result thereof to the second comparator 84 (the sloped dashed line portion in Part (b) of Fig. 8).

The inverting amplifier circuit 85 receives the reactor current iᵢₙᵥ and inverts the reactor current to a negative value (the negative reactor current value -iᵢₙᵥ).

The second comparator 84 compares the output value from the second slope compensator 83 with the negative reactor current value -iᵢₙᵥ. When the output value of the second comparator 84 matches the negative reactor current value -iᵢₙᵥ (the matching portion in Part (b) of Fig. 8), the second comparator 84 outputs the second reset signal TᵣᵢₚB. The second reset signal TᵣᵢₚB is fed back to the second slope compensator 83 and also outputted to the determination unit 87.

The determination unit 87 has a lookup table set as illustrated in the table in Fig. 7. The determination unit 87 determines the inputted first and second reset signals TᵣᵢₚA and TᵣᵢₚB based on the phase signal inputted from the phase synchronization circuit 61 and the lookup table. As a result, the determination unit 87 outputs control signals (the first control signal Q1 and the second control signal Q2) to turn ON/OFF the first switching element S1 and the second switching element S2.

Specifically, as illustrated in Part (a) of Fig. 8, when the phase signal sin(θᵢₙᵥ) is equal to or greater than 0, that is, during the positive half cycle, if the first reset signal TᵣᵢₚA is inputted, the determination unit 87 outputs the first control signal Q1 in a high state and outputs the second control signal Q2 in a low state. On the other hand, even if the second reset signal TᵣᵢₚB is inputted, the determination unit 87 disregards this signal and does not output a control signal. When the set signal T_{PWM} is inputted, the determination unit 87 outputs the first control signal Q1 in a low state and outputs the second control signal in a high state.

Further, as illustrated in Part (b) of Fig. 8, when the phase signal sin(θᵢₙᵥ) is less than 0, that is, during the negative half cycle, even if the first reset signal is inputted, the determination unit 87 disregards this signal and does not output a control signal. On the other hand, when the second reset signal is inputted, the determination unit 87 outputs the first control signal in the low state and outputs the second control signal in the high state. When the set signal is inputted, the determination unit 87 outputs the first control signal Q1 in the high state and outputs the second control signal Q2 in the low state.

As illustrated in Fig. 6, the first control signal Q1 and the second control signal Q2 thus outputted by the determination unit 87 are inputted to the gate driver 88. The gate driver 88 also receives a given dead time Td.

The gate driver 88 turns the first switching element S1 ON/OFF based on the first control signal Q1, and turns the second switching element S2 ON/OFF based on the second control signal Q2. Specifically, when the first control signal Q1 is in the high state, the gate driver 88 outputs drive voltage to the first switching element S1 to turn the first switching element S1 ON. When the first control signal Q1 is in the low state, the gate driver 88 turns the first switching element S1 OFF without outputting the drive voltage thereto. The gate driver 88 turns the second switching element S2 ON/OFF in a similar manner depending on the state of the second control signal Q2.

While the present disclosure is realized using the controller 14 as illustrated in Figs. 6 to 8, for example, it may be such that the positive and negative peak current command values (iᵢₙᵥ*.p, -iᵢₙᵥ*.p) are outputted using a controller having a DAC output, and all or a part of the circuit blocks thereafter are designed using analog circuits.

### <Verification of Effects by Simulation>

Simulations were performed for two scenarios to verify the effect(s) of miniaturizing the reactor 24. The inductance of the reactor 24 in Scenario 1 was set to 340 µH. In Scenario 2, the inductance of the reactor 24 was set to the half of Scenario 1, 170 µH.

The circuit parameters used in the simulations of Scenarios 1 and 2 are as follows.
Capacity of input capacitor 23 (Cᵢₙᵥ): 5.5 µF
PWM frequency: 24 kHz
Input voltage (eᵢₙᵥ): 240 V/60 Hz
DC load: 4 kW
Dead time: 2 µs
Capacity of output capacitor 55 (C_{dc}): 2200 µF
Output voltage (V_{dc}): 400 V.

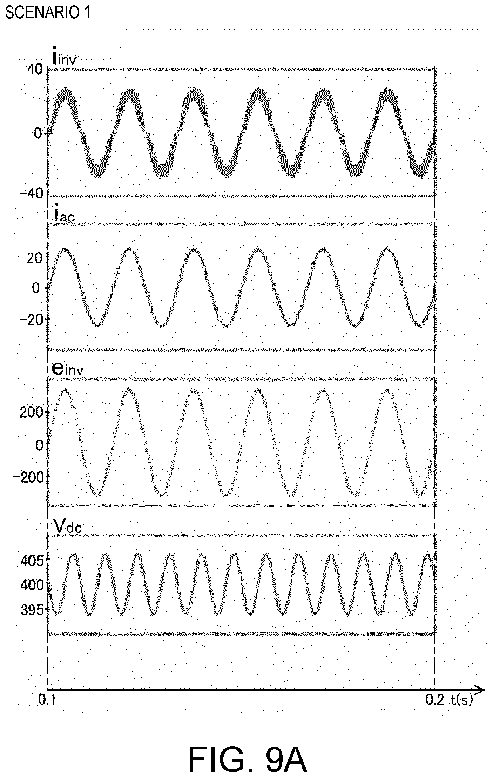

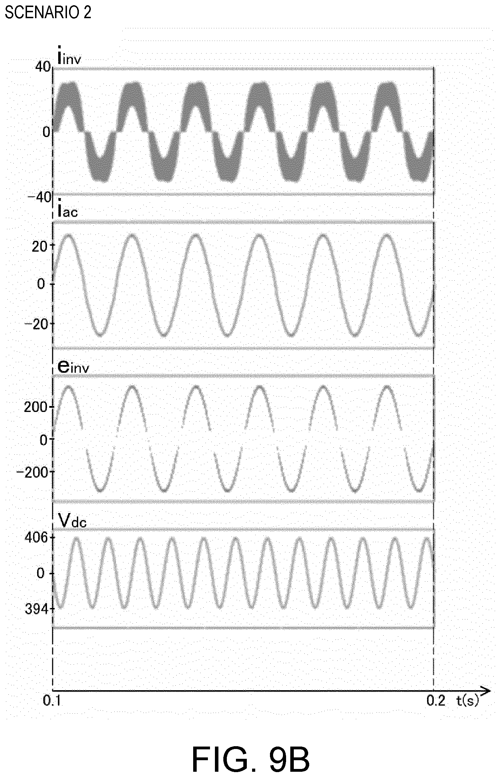

Fig. 9A illustrates a simulation result for Scenario 1. Fig. 9B illustrates a simulation result for Scenario 2. It was confirmed that even with the small reactor 24 with the inductance of 170 µH, a reactor current with a stable waveform, which is not significantly different from that of the reactor 24 with the inductance of 340 µH, can be obtained in practice.

In other words, according to the present disclosure, it is possible to reduce the inductance of the reactor 24 to 170 µH or less.

Furthermore, the effect of the improved controller 14A was also verified. That is, the effects were compared between the cases where the AC current control unit 70 is provided and not provided. Specifically, simulations were performed in the circuit used for the situation of Scenario 2 described above, for the cases where the AC current control unit 70 is provided and not provided.

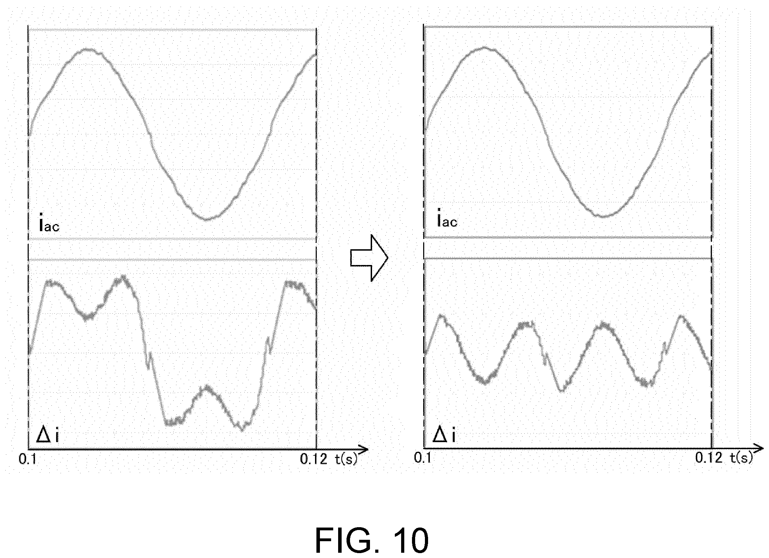

The results are illustrated in Fig. 10. The left side of Fig. 10 illustrates the case without the AC current control unit 70, and the right side of Fig. 10 illustrates the case with the AC current control unit 70. When the AC current control unit 70 was not provided, crossover distortion was observed, while when the AC current control unit 70 was provided, almost no crossover distortion was observed (see Δi).

As a result, it was confirmed that the total harmonic distortion (THDi) of the reactor current iᵢₙᵥ was also improved by approximately 0.5% from 3.12%.

Thus, according to the present disclosure, the peak current mode control can be performed using a simple and inexpensive circuit, making it possible to reduce the size of the reactor 24 and improving the total harmonic distortion of the reactor current iᵢₙᵥ.

It should be understood that the embodiments herein are illustrative and not restrictive, since the scope of the invention is defined by the appended claims rather than by the description preceding them, and all changes that fall within metes and bounds of the claims, or equivalence of such metes and bounds thereof, are therefore intended to be embraced by the claims.

### DESCRIPTION OF REFERENCE CHARACTERS

- 1: Vehicle
- 2: Commercial Power Source
- 3: Charging System
- 4: Battery
- 5: DC/DC Converter
- 6: AC/DC Converter (Power Converter)
- 10: Current Sensor
- 11: Input Voltage Sensor
- 12: Output Voltage Sensor
- 13: Converter Mechanism
- 14: Controller
- 14A: Improved Controller
- 20: Bridgeless PFC Circuit
- 21: Input-side Wiring
- 21a: N Input-side Wiring
- 21b: L Input-side Wiring
- 22: Output-side Wiring
- 22a: N Output-side Wiring
- 22b: P Output-side Wiring
- 23: Input Capacitor
- 24: Reactor
- 25: First Switching Element
- 26: Second Switching Element
- 27: Flyback Diode
- 31: First Diode
- 32: Second Diode
- 33: First Leg
- 34: Second Leg
- 35: Output-side Capacitor
- 36: Second Reactor
- 41: First Diode
- 42: Second Diode
- 43: Third Diode
- 44: Fourth Diode
- 45: First Leg
- 46: Second Leg
- 47: Third Leg
- 48: Output-side Capacitor
- 51: First Diode
- 52: Second Diode
- 53: First Leg
- 54: Second Leg
- 55: Output-side Capacitor
- 60: DC Voltage Control Unit
- 61: Phase Locked Loop
- 62: Multiplier
- 63: Adder
- 70: AC Current Control Unit
- 80: Peak Current Control Unit
- 81: First Slope Compensator
- 82: First Comparator
- 83: Second Slope Compensator
- 84: Second Comparator
- 85: Inverting Amplifier Circuit (Inverting Circuit)
- 86: PWM Control Unit
- 87: Determination Unit
- 88: Gate Driver

## Claims

1. A power converter (6) configured to convert alternating current (AC) input voltage into direct current (DC) output voltage, comprising:
a converter mechanism (13) having a bridgeless power factor correction (PFC) circuit (20); and
a controller (14) configured to control the converter mechanism (13),
wherein the bridgeless PFC circuit (20) includes:
a pair of input-side wirings (21) configured to input the AC input voltage;
a pair of output-side wirings (22) configured to output the DC output voltage;
a capacitor (23) connected to the pair of input-side wirings (21);
a reactor (24) disposed in at least one of the pair of input-side wirings (21) at a position on an output side of a connecting position with the capacitor (23); and
a first switching element (25) and a second switching element (26) each disposed between one of the pair of input-side wirings (21) and one of the pair of output-side wirings (22), and on which a switching operation is performed by the controller (14),
wherein the controller (14) includes a peak current control unit (80) configured to execute a peak current mode control by using a first slope compensation circuit (81) corresponding to a positive polarity of the AC input voltage, and a second slope compensation circuit (83) corresponding to a negative polarity of the AC input voltage, and
wherein the second slope compensation circuit (83) has an inverting circuit (85) configured to invert the polarity of the AC input voltage, and is structured using a same slope compensation circuit as the first slope compensation circuit (81).

2. The power converter (6) of claim 1, wherein the controller (14) further includes a DC voltage control unit (60) configured to output a first input current command value corresponding to the maximum value of the input current flowing in the input-side wirings (21) on the output side from the connecting positions with the capacitor (23), wherein the first input current command value is converted to a second input current command value corresponding to an instantaneous value based on a phase of the AC input voltage, and wherein a peak current command value output to the peak current control unit (80) is set by adding a given current correction amount to the second input current command value.

3. The power converter (6) of claim 2, wherein the controller (14) further includes an AC current control unit (70) configured to receive the second input current command value and output a third input current command value corresponding to an instantaneous value of the input current flowing in the input-side wirings (21) at the connecting positions with the capacitor (23), and wherein the peak current command value received by the peak current control unit (80) is set by adding the current correction amount to the third input current command value.

4. The power converter (6) of claim 1, wherein the bridgeless PFC circuit (20) further includes:
a first diode (31) and a second diode (32); and
a first leg (33) and a second leg (34) connected in parallel to each other between the pair of output-side wirings (22),
wherein the first leg (33) is provided with the first switching element (25) and the first diode (31) in series so that the current flows in directions away from each other, and the second leg (34) is provided with the second switching element (26) and the second diode (32) symmetrically to the first switching element (25) and the first diode (31), and
wherein an output end of one of the input-side wirings (21a) is connected to the first leg (33) between the first switching element (25) and the first diode (31), and an output end of the other one of the input-side wirings (21b) is connected to the second leg (34) between the second switching element (26) and the second diode (32).

5. The power converter (6) of claim 2, wherein the bridgeless PFC circuit (20) further includes:
a first diode (31) and a second diode (32); and
a first leg (33) and a second leg (34) connected in parallel to each other between the pair of output-side wirings (22),
wherein the first leg (33) is provided with the first switching element (25) and the first diode (31) in series so that the current flows in directions away from each other, and the second leg (34) is provided with the second switching element (26) and the second diode (32) symmetrically to the first switching element (25) and the first diode (31), and
wherein an output end of one of the input-side wirings (21a) is connected to the first leg (33) between the first switching element (25) and the first diode (31), and an output end of the other one of the input-side wirings (21b) is connected to the second leg (34) between the second switching element (26) and the second diode (32).

6. The power converter (6) of claim 3, wherein the bridgeless PFC circuit (20) further includes:
a first diode (31) and a second diode (32); and
a first leg (33) and a second leg (34) connected in parallel to each other between the pair of output-side wirings (22),
wherein the first leg (33) is provided with the first switching element (25) and the first diode (31) in series so that the current flows in directions away from each other, and the second leg (34) is provided with the second switching element (26) and the second diode (32) symmetrically to the first switching element (25) and the first diode (31), and
wherein an output end of one of the input-side wirings (21a) is connected to the first leg (33) between the first switching element (25) and the first diode (31), and an output end of the other one of the input-side wirings (21b) is connected to the second leg (34) between the second switching element (26) and the second diode (32).

7. The power converter (6) of claim 1, wherein the bridgeless PFC circuit (20) further includes:
a first diode (51) and a second diode (52); and
a first leg (53) and a second leg (54) connected in parallel to each other between the pair of output-side wirings (22),
wherein the first leg (53) is provided with the first diode (51) and the second diode (52) in series so that the current flows in the same direction, and the second leg (54) is provided with the first switching element (25) and the second switching element (26) in series so that the current flows opposite from the first diode (51) and the second diode (52), and
wherein an output end of one of the input-side wirings (21a) is connected to the first leg (53) between the first diode (51) and the second diode (52), and an output end of the other one of the input-side wirings (21b) is connected to the second leg (54) between the first switching element (25) and the second switching element (26).

8. The power converter (6) of claim 2, wherein the bridgeless PFC circuit (20) further includes:
a first diode (51) and a second diode (52); and
a first leg (53) and a second leg (54) connected in parallel to each other between the pair of output-side wirings (22),
wherein the first leg (53) is provided with the first diode (51) and the second diode (52) in series so that the current flows in the same direction, and the second leg (54) is provided with the first switching element (25) and the second switching element (26) in series so that the current flows opposite from the first diode (51) and the second diode (52), and
wherein an output end of one of the input-side wirings (21a) is connected to the first leg (53) between the first diode (51) and the second diode (52), and an output end of the other one of the input-side wirings (21b) is connected to the second leg (54) between the first switching element (25) and the second switching element (26).

9. The power converter (6) of claim 3, wherein the bridgeless PFC circuit (20) further includes:
a first diode (51) and a second diode (52); and
a first leg (53) and a second leg (54) connected in parallel to each other between the pair of output-side wirings (22),
wherein the first leg (53) is provided with the first diode (51) and the second diode (52) in series so that the current flows in the same direction, and the second leg (54) is provided with the first switching element (25) and the second switching element (26) in series so that the current flows opposite from the first diode (51) and the second diode (52), and
wherein an output end of one of the input-side wirings (21a) is connected to the first leg (53) between the first diode (51) and the second diode (52), and an output end of the other one of the input-side wirings (21b) is connected to the second leg (54) between the first switching element (25) and the second switching element (26).

10. The power converter (6) of claim 1, wherein the bridgeless PFC circuit (20) further includes:
a first diode (41), a second diode (42), a third diode (43), and a fourth diode (44);
a first leg (45) and a second leg (46) connected in parallel to each other between the pair of output-side wirings (22); and
a third leg (47) connected to the pair of input-side wirings (21) therebetween, on the output side from the reactor (24),
wherein the first leg (45) is provided with the first diode (41) and the second diode (42) in series so that the current flows in the same direction, and the second leg (46) is provided with the third diode (43) and the fourth diode (44) symmetrically to the first diode (41) and the second diode (42),
wherein the third leg (47) is provided with the first switching element (25) and the second switching element (26) in series so that the current flows against each other, and
wherein an output end of one of the input-side wirings (21a) is connected to the first leg (45) between the first diode (41) and the second diode (42), and an output end of the other one of the input-side wirings (21b) is connected to the second leg (46) between the third diode (43) and the fourth diode (44).

11. The power converter (6) of claim 2, wherein the bridgeless PFC circuit (20) further includes:
a first diode (41), a second diode (42), a third diode (43), and a fourth diode (44);
a first leg (45) and a second leg (46) connected in parallel to each other between the pair of output-side wirings (22); and
a third leg (47) connected to the pair of input-side wirings (21) therebetween, on the output side from the reactor (24),
wherein the first leg (45) is provided with the first diode (41) and the second diode (42) in series so that the current flows in the same direction, and the second leg (46) is provided with the third diode (43) and the fourth diode (44) symmetrically to the first diode (41) and the second diode (42),
wherein the third leg (47) is provided with the first switching element (25) and the second switching element (26) in series so that the current flows against each other, and
wherein an output end of one of the input-side wirings (21a) is connected to the first leg (45) between the first diode (41) and the second diode (42), and an output end of the other one of the input-side wirings (21b) is connected to the second leg (46) between the third diode (43) and the fourth diode (44)."

12. The power converter (6) of claim 3, wherein the bridgeless PFC circuit (20) further includes:
a first diode (41), a second diode (42), a third diode (43), and a fourth diode (44);
a first leg (45) and a second leg (46) connected in parallel to each other between the pair of output-side wirings (22); and
a third leg (47) connected to the pair of input-side wirings(21), on the output side of the reactor (24),
wherein the first leg (45) is provided with the first diode (41) and the second diode (42) in series so that the current flows in the same direction, and the second leg (46) is provided with the third diode (43) and the fourth diode (44) symmetrically to the first diode (41) and the second diode (42),
wherein the third leg (47) is provided with the first switching element (25) and the second switching element (26) in series so that the current flows in opposing directions, and
wherein an output end of one of the input-side wirings (21a) is connected to the first leg (45) between the first diode (41) and the second diode (42), and an output end of the other one of the input-side wirings (21b) is connected to the second leg (46) between the third diode (43) and the fourth diode (44).

13. The power converter according to claim 1, wherein the controller (14) further comprises a phase-locked loop (61) configured to perform phase synchronization of the AC input voltage (eᵢₙᵥ) and outputs phase information used to determine the timing for controlling the first and second switching elements (25, 26).

14. The power converter according to claim 3, wherein the AC current control unit (70) comprises a subtraction unit (71) configured to calculate a current difference value (Δi) by subtracting the actual reactor current value (iᵢₙᵥ) from the second input current command value (i_{inv*}), wherein the current difference value (Δi) serves as a feedback value to improve responsiveness and reduce distortion of the reactor current.

15. The power converter according to claim 1, wherein the first and second switching elements (25, 26) are controlled by a driver (88) that sets a dead time (Td) between the switching operations of the switching elements to prevent overlap of conduction phases, thereby increasing the reliability of the system.
